# EUROPÄISCHE PATENTSCHRIFT

(11) **EP 1 541 282 B1**
(45) Veröffentlichungstag und Bekanntmachung des Hinweises auf die Patenterteilung: **09.08.2006**
(21) Anmeldenummer: 04105523.7
(22) Anmeldetag: 04.11.2004
(51) Int. Cl.: B23Q 17/22

(54) **Verfahren zum Vermessen der Position eines Werkstücks**
Method for measuring the position of a workpiece
Procédé de mesure de la position d'une pièce

(30) Priorität: 12.12.2003 DE 10358201
(43) Veröffentlichungstag der Anmeldung: 15.06.2005
(73) Patentinhaber: ROBERT BOSCH GMBH, 70442 Stuttgart (DE)
(72) Erfinder: Hohmann, Eugen, 96191 Viereth-Trunstadt (DE); Dieterle, Martin, 71636 Ludwigsburg (DE)

(56) Entgegenhaltungen:
- EP-A- 0 256 200
- US-A- 5 329 457
- PATENT ABSTRACTS OF JAPAN Bd. 1999, Nr. 03, 31. März 1999 (1999-03-31) & JP 10 337637 A (NIPPON STEEL CORP; NITTETSU PLANT DESIGNING CORP), 22. Dezember 1998 (1998-12-22)

## Beschreibung

### Stand der Technik

Ein bislang nicht zufriedenstellend gelöstes Problem bei der Fertigung hochgenauer Werkstücke besteht darin, dass vor der Bearbeitung die relative Lage eines auf einem Maschinentisch aufgespannten Werkstücks zu der Bearbeitungsspindel der Werkzeugmaschine erfasst werden muss.

Dies kann beispielsweise, wenn es sich bei der Werkzeugmaschine um eine Fräsmaschine handelt, durch Anfahren des Fräsers an das Werkstück erfolgen. Sobald der Fräser das Werkstück berührt, wird der Vorschub unterbrochen, die Position des Fräsers ermittelt und dieser Vorgang für die zweite Achse des Maschinentisches wiederholt. Dadurch lässt sich die Lage des Werkstücks relativ zum Fräser bestimmen. Nachteilig an diesen Verfahren ist, dass es nicht automatisierbar ist und beim Anfahren des Fräsers an das Werkstück ein kleiner Span vom Werkstück abgetragen wird.

Der Erfindung liegt die Aufgabe zugrunde, ein Verfahren zum Vermessen der Position eines Werkstücks bereitzustellen, das automatisierbar ist und keine Beschädigungen des Werkstücks verursacht.

Diese Aufgabe wird erfindungsgemäß bei einem Verfahren zum Vermessen der Position eines Werkstücks relativ zu der Bearbeitungsspindel einer Werkzeugmaschine, wobei das Werkstück mindestens mittelbar auf einem in zwei Achsen verfahrbaren Maschinentisch der Werkzeugmaschine aufgespannt ist, durch folgende Verfahrensschritte gelöst:

Verfahren des Werkstücks relativ zu einer Elektrode in einer ersten Richtung bis Werkstück und eine Elektrode sich berühren und Abspeichern der Position des Werkstücks Umkehren der Relativbewegung von Werkstück und Elektrode, Verfahren des Werkstücks relativ zur Elektrode in der ersten Richtung bis Werkstück und Elektrode sich berühren und Abspeichern der Position des Werkstücks, Verfahren des Werkstücks relativ zur Elektrode in einer zweiten Richtung bis Werkstück und Elektrode sich berühren und Abspeichern der Position des Werkstücks, Umkehren der Relativbewegung von Werkstück und Elektrode, Verfahren des Werkstücks relativ zur Elektrode in der zweiten Richtung bis Werkstück und Elektrode sich berühren sowie Abspeichern der Position des Werkstücks und Berechnen eines Referenzpunktes des Werkstücks relativ zu der Elektrode aus den gespeicherten Werten, wobei der Kontakt zwischen Werkstück und Elektrode durch die Überwachung einer elektrischen Spannung zwischen Werkstück und Elektrode erfolgt.

### Vorteile der Erfindung

Mit dem erfindungsgemäß beanspruchten Verfahren ist es möglich, ohne Beschädigungen des Werkstücks und vollautomatisierbar die Position des Werkstücks relativ zu einer Elektrode festzustellen. Als Elektrode kann beispielsweise ein Fräser einer Fräsmaschine, der Bohrer einer Bohrmaschine oder die Elektrode einer Erodiermaschine verwendet werden. Alternativ kann auch in die Werkzeugaufnahme einer Werkzeugmaschine eine eigens dafür angefertigte Elektrode eingespannt werden. Mit dieser Elektrode kann dann die Position des Werkzeugs relativ zur Werkzeugaufnahme der Werkzeugmaschine festgestellt werden und anschließend die Elektrode durch das eigentliche Bearbeitungswerkzeug ersetzt werden. Dann kann die Bearbeitung des Werkstücks erfolgen.

In einer ersten Variante des erfindungsgemäßen Verfahrens ist die erste Richtung parallel zu einer ersten Bewegungsachse der Werkzeugmaschine und die zweite Richtung parallel zu einer zweiten Bewegungsachse der Werkzeugmaschine. Bei dieser Verfahrensvariante ist die Steuerung des Verfahrens besonders einfach.

Bei einer alternativen Variante des erfindungsgemäßen Verfahrens wird die erste Richtung durch Superposition einer Bewegung der ersten Bewegungsachse und der zweiten Bewegungsachse der Werkzeugmaschine gebildet und verläuft die zweite Richtung orthogonal zu der ersten Richtung. Wenn beispielsweise die erste Richtung des erfindungsgemäßen Verfahrens die erste Winkelhalbierende zwischen positiver X-Achse und positiver Y-Achse der Werkzeugmaschine ist, dann ist der maximale Verfahrweg in Richtung der ersten Richtung größer als der maximale Verfahrweg der Werkzeugmaschine in Richtung der X-Achse oder der Y-Achse.

Wenn zum Beispiel der maximale der Verfahrweg Sₘₐₓ der Werkzeugmaschine in Richtung der X-Achse und der Y-Achse gleich groß ist, kann in der ersten Richtung des erfindungsgemäßen Verfahrens ein Verfahrweg von √2 x Sₘₐₓ realisiert werden. D. h. durch diese Maßnahme kann der Messbereich in der ersten und in der zweiten Richtung um den Faktor 1,4 vergößert werden. Dies ist von besonderer Bedeutung, wenn der Verfahrweg der Werkzeugmaschine begrenzt ist, beispielsweise weil die Verstellung mit Hilfe von Piezo-Aktoren realisiert wird.

Wenn die Außenkontur eines Werkstücks mit dem erfindungsgemäßen Verfahren erfasst werden soll, muss die Elektrode von außen an das Werkstück herangefahren werden. Bevor die Elektrode anschließend von einer anderen Seite an das Werkstück herangefahren wird, muß die Elektrode soweit angehoben werden, dass das Werkstück unter der Elektrode hindurchbewegt werden kann, bevor die Elektrode von einer anderen Richtung an das Werkstück herangefahren werden kann.

Das erfindungsgemäße Verfahren ist bei verschiedensten automatischen NC-gesteuerten Werkzeugmaschinen einsetzbar, da die Überwachung einer elektrischen Spannung sehr einfach möglich ist und sich die Spannung zwischen Elektrode und Werkstück signifikant ändert, sobald ein Kontakt zwischen Elektrode und Werkstück besteht. Außerdem muss die überwachte Spannung nicht aufwändig umgeformt werden, um in eine Maschinensteuerung als Eingangsgröße eingespeist werden zu können, wie dies erfindungsgemäß auch beansprucht wird.

Das erfindungsgemäße Verfahren ist besonders vorteilhaft beim Erodieren kleinster Bohrungen und dem Fertigbearbeiten vorgebohrter Bohrungen einsetzbar, da in diesem Fall die Elektrode, welche zum Erodieren eingesetzt wird, gleichzeitig auch zur Erfassung der Position des Werkstücks eingesetzt werden kann.

Alternativ kann das erfindungsgemäße Verfahren auch auf anderen Werkzeugmaschinen, wie beispielsweise Fräsmaschinen, Bohrmaschinen, Schleifmaschinen oder Laserbearbeitungsmaschinen eingesetzt werden.

Weitere Vorteile und vorteilhafte Ausgestaltungen der Erfindung sind der nachfolgenden Zeichnung, deren Beschreibung und den Patentansprüchen entnehmbar.

### Zeichnungen

Es zeigen:
- Figur 1: einen Längsschnitt durch ein Werkstück mit einer vorgebohrten Bohrung, in die eine Elektrode eingefahren ist;
- Figur 2: verschiedene Stadien eines Ausführungsbeispiels des erfindungsgemäßen Verfahrens; und
- Figur 3: den zeitlichen Verlauf der elektrischen Spannung zwischen Werkstück und Elektrode sowie die Verfahrbewegungen des Maschinentisches in X- und Y-Richtung.

### Beschreibung der Ausführungsbeispiele

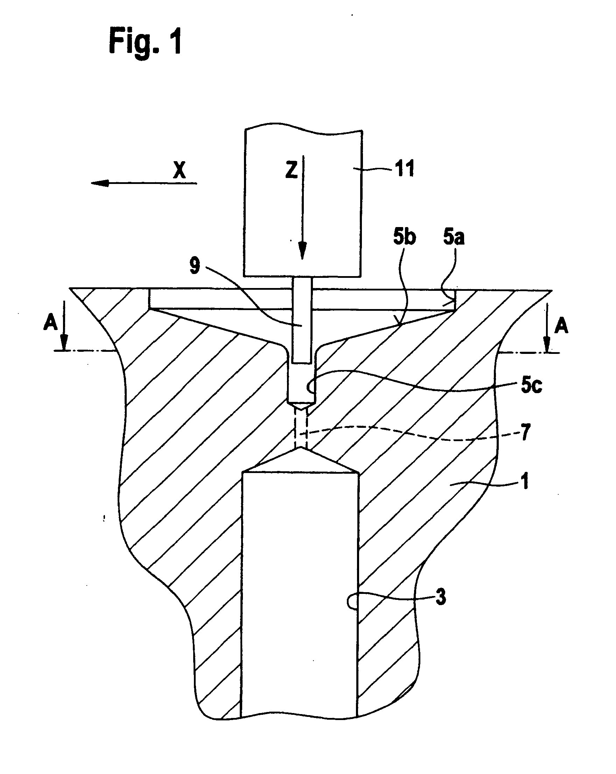

In Figur 1 ist ein Werkstück 1 teilweise geschnitten und stark vergrößert dargestellt. In dem Werkstück 1 sind vor dem Erodiervorgang eine Sacklochbohrung 3 und eine Stufenbohrung 5 vorhanden. Zwischen der Sacklochbohrung 3 und der Stufenbohrung 5 besteht vor dem Erodiervorgang keine Verbindung. Ziel einer im Anschluß an das erfindungsgemäße Verfahren durchzuführenden Bearbeitung ist es, zwischen der Sacklochbohrung 3 und der Stufenbohrung 5 eine dünne Bohrung, die in Figur 1 durch eine gestrichelte Linie angedeutet ist, herauszuarbeiten. Diese Bohrung 7 kann beispielsweise die Funktion einer Drossel haben und wird deshalb im Zusammenhang mit der Beschreibung des erfindungsgemäßen Verfahrens als Drosselbohrung 7 bezeichnet. Um Missverständnisse auszuschließen, wird nochmals darauf hingewiesen, dass die Drosselbohrung 7 erst durch den an das erfindungsgemäße Verfahren anschließenden Erodiervorgang hergestellt wird.

Die Stufenbohrung 5 besteht aus einem ersten zylindrischen Abschnitt 5a, einem konischen Abschnitt 5b und einem zweiten zylindrischen Abschnitt 5c. Wie aus Figur 1 ersichtlich, kann der Übergang zwischen dem konischen Abschnitt 5b und dem zweiten zylindrischen Abschnitt 5c verrundet sein.

Die Drosselbohrung 7 wird mit Hilfe einer Elektrode 9, die in einer Elektrodenführung 11 gelagert und geführt ist, durch Funkenerosion (nicht dargestellt) hergestellt. Das Verfahren der Funkenerosion an sich ist Stand der Technik und jedem Fachmann der Fertigungstechnik bekannt, so dass im Zusammenhang mit der Erfindung auf eine Beschreibung der Funkenerosion verzichtet wird.

Die Elektrode 9 kann in Richtung einer Z-Achse aus der Elektrodenführung 11 herausbewegt werden. Diese Bewegung der Elektrode 9 in Richtung der Z-Achse wird im Zusammenhang mit dem erfindungsgemäßen Verfahren als Vorschubbewegung bezeichnet.

Die Drosselbohrung 7 ist fertiggestellt, wenn das untere Ende der Elektrode 9 die Sacklochbohrung 3 erreicht hat. Da an den Durchmesser der Drosselbohrung 7 und auch die hydraulischen Eigenschaften sowohl der Drosselbohrung 7 als auch der konischen Stufenbohrung 5 und der Sacklochbohrung 3 hohe Anforderungen gestellt werden, ist es erforderlich, die Drosselbohrung 7 genau mittig zu dem zweiten zylindrischen Abschnitt 5c der Stufenbohrung 5 zu placieren. Außerdem müssen der Durchmesser der Drosselbohrung 7 sehr genau gefertigt werden.

In der in Figur 1 dargestellten Position der Elektrode 9 befindet sich diese nicht genau mittig in dem zweiten zylindrischen Abschnitt 5c der Stufenbohrung 5. Die Elektrode 9 ist vielmehr etwas nach links aus der Mitte versetzt positioniert. Dies ist unerwünscht und muss, bevor mit dem Erodiervorgang begonnen wird, korrigiert werden. Diese Korrektur beziehungsweise die Ermittlung der Position der Stufenbohrung 5c relativ zur Elektrode 9 ist Teil des erfindungsgemäß beanspruchten Verfahrens.

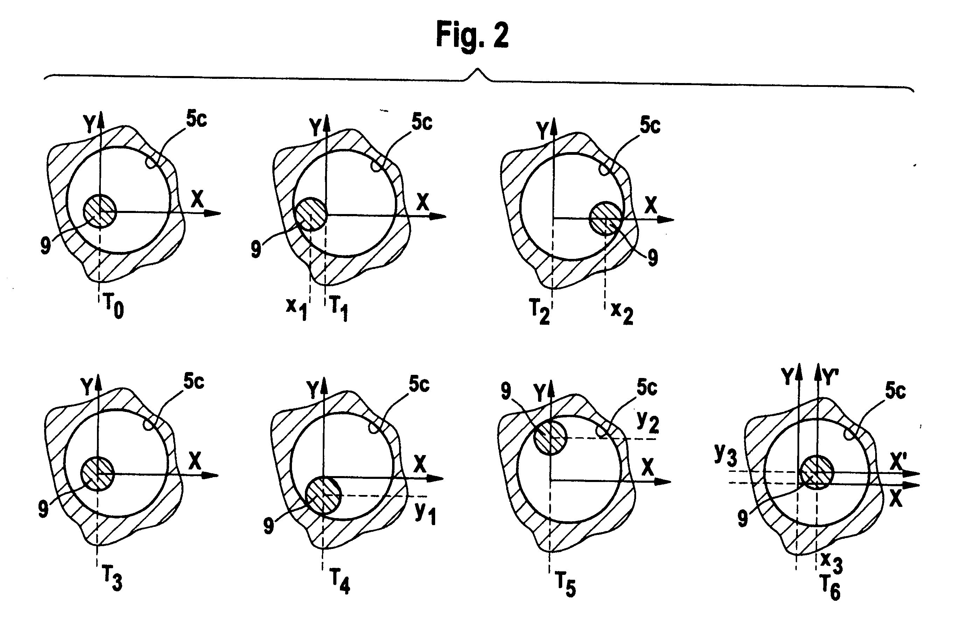

Um ein Ausführungsbeispiel des erfindungsgemäß beanspruchten Verfahrens zu veranschaulichen, sind in Figur 2 mehrere Schnitte entlang der Linie A-A zu verschiedenen Zeitpunkten T₀ bis T₆ dargestellt, wobei die Elektrode 9 verschiedene Positionen einnimmt. Anhand der Figur 2 soll nun das erfindungsgemäße Verfahren zum Vermessen der Position des zweiten zylindrischen Abschnitts 5c beispielhaft erläutert werden. Dieses Verfahren kann ohne Schwierigkeiten auf verschiedenste Werkstücke angewandt werden.

In den sieben Darstellungen der Figur 2 sind jeweils die X-Achse und die Y-Achse eines karthesischen Koordinatensystems eingetragen. Der Ursprung dieses Koordinatensystems liegt in der Mitte der Elektrode 9 vor dem Beginn des Vermessens der Position des zweiten zylindrischen Abschnitts 5c. Das Koordinatensystem in der Figur 1, von dem die X-Achse und die Z-Achse dargestellt sind, sowie das Koordinatensystem der Figur 2, in dem die X-Achse und die Y-Achse dargestellt sind, sind identisch.

Zum Zeitpunkt T₀ ist in Figur 2 die Position der Elektrode 9 dargestellt, die der Position der Elektrode 9 in Figur 1 entspricht. Ausgehend von der Position der Elektrode 9 zum Zeitpunkt T₀ werden das Werkstück 1 beziehungsweise der zweite zylindrische Abschnitt 5c und die Elektrode 9 relativ zueinander so weit bewegt, bis die Elektrode 9 am linken Rand der Bohrung anliegt. Zwischen der Elektrode 9 und dem Werkstück 1 liegt eine elektrische Spannung an. Deshalb entstseht ein Kurzschluß zwischen Elektrode 9 und Werkstück 1 sobald sich Elektrode 9 und Werkstück 1 berühren. Durch diesen Kurzschluß ändert sich die elektrische Spannung zwischen Werkstück 1 und Elektrode 9. Diese Änderung der elektrischen Spannung wird von der Maschinensteuerung der Erodiermaschine ausgewertet und führt dazu, dass die Relativbewegung zwischen Elektrode 9 und dem zweiten zylindrischen Abschnitt 5c der Stufenbohrung 5 zum Zeitpunkt T₁ beendet wird. Die Position der Elektrode 9 zum Zeitpunkt T₁ hat die Koordinaten [x₁, 0].

Im Zusammenhang mit den Relativbewegungen von Elektrode 9 und dem Werkstück 1 beziehungsweise des zweiten zylindrischen Abschnitts 5c der Stufenbohrung 5 versteht es sich von selbst, dass, je nach Ausführung der nicht dargestellten Erodiermaschine entweder ein Maschinentisch, auf dem das Werkstück 1 aufgespannt ist, in X- und Y-Richtung verfahren werden kann oder die Elektrodenführung 11 in X- oder Y-Richtung verfahren werden kann. Für das erfindungsgemäße Verfahren ist es unerheblich, ob sich die Elektrode 9 oder das Werkstück 1 bewegt. Es ist auch eine Kombination beider Bewegungen möglich.

Ausgehend von der Position [x₁, 0] wird in einem weiteren Verfahrensschritt die Elektrode 9 in Richtung der X-Achse an die rechte Seite des zweiten zylindrischen Abschnitts 5c der Bohrung 5 verfahren.

Zum Zeitpunkt T₂ hat die Elektrode 9 Kontakt zum zweiten zylindrischen Abschnitt 5c, was sich wiederum in einer Änderung der elektrischen Spannung zwischen Werkstück 1 und Elektrode 9 zeigt. Sobald der Kontakt zwischen Elektrode 9 und zweitem zylindrischen Abschnitt 5c hergestellt ist, wird die Relativbewegung zwischen Elektrode 9 und Werkstück 1 unterbrochen und die Position [x₂, 0] abgespeichert.

Anschließend wird die Elektrode 9 wieder in den Ursprung des Koordinatensystems verfahren. Diese Position ist zum Zeitpunkt T₃ erreicht. Das heißt, dass die Elektrode, ebenso wie zum Zeitpunkt T₀, die Koordinaten [0, 0] hat.

In einem weiteren Schritt wird nun die Elektrode in Richtung der negativen Y-Achse so lange nach unten verfahren, bis ein Kontakt zwischen der Elektrode 9 und dem zweiten zylindrischen Abschnitt 5c erreicht ist. Auch hier wird in gleicher Weise, wie zuvor mehrfach beschrieben, die Relativbewegung unterbrochen und die Position [0, y₁] der Elektrode 9 abgespeichert. In einem weiteren Schritt wird die Elektrode 9 nun in Richtung der positiven Y-Achse so weit relativ zum Werkstück bewegt, bis ein Kontakt zwischen Elektrode 9 und zweitem zylindrischen Abschnitt 5c besteht. Auch diese Position [0, y₂] wird abgespeichert.

Aus den Koordinaten x₁, x₂, y₁ und y₂ kann der Mittelpunkt des zweiten zylindrischen Abschnitts 5c der Stufenbohrung 5 berechnet werden. Diese Koordinaten sind in der Figur 2 mit x₃ und y₃ bezeichnet. Anschließend wird die Elektrode 9 zum Mittelpunkt der Bohrung 5c verfahren und das Koordinatensystem in den Mittelpunkt des zweiten zylindrischen Abschnitts 5c transformiert. Dieses transformierte Koordinatensystem ist zum Zeitpunkt T₆ in der Figur 2 mit den Achsen X' und Y' gekennzeichnet.

Wenn diese Transformation des Koordinatensystems in den Mittelpunkt des zweiten zylindrischen Abschnitts 5c stattgefunden hat, kann sich eine Bearbeitung des Werkstücks 1 mit Hilfe der Elektrode durch Erodieren anschließen. Dabei sind sämtliche Vorschubbahnen in allen drei Raumesrichtungen möglich.

Wenn die Drosselbohrung 7 (siehe Figur 1) hergestellt werden soll, ist dazu ein Vorschub der Elektrode 9 in Richtung der Z-Achse erforderlich. Um den gewünschten Durchmesser der Drosselbohrung zu erreichen, kann jedoch eine kreisförmige Bewegung der Elektrode in der X-Y-Ebene überlagert werden. Dadurch kann jeder beliebige Durchmesser der Drosselbohrung mit höchster Präzision erreicht werden, der größer als der Durchmesser der Elektrode 9 ist. Es können auch konische Abschnitt in der Stufenbohrung 5 nachgearbeitet oder überarbeitet werden oder es kann auch die Drosselbohrung 7 konisch ausgebildet werden, je nach gewünschter Geometrie des Werkstücks. Wichtig ist jedoch, dass durch das erfindungsgemäße vollautomatisierbare Verfahren zum Vermessen der Position einer Bohrung in einem Werkstück die Elektrode 9 exakt zentriert werden kann, was der Bearbeitungsqualität des fertig bearbeiteten und erodierten Werkstücks 1 zugute kommt.

Dabei ist zu berücksichtigen, dass das Werkstück 1 in Figur 1 stark vergrößert dargestellt ist. Die Drosselbohrung 7 hat in der Regel nur einen Durchmesser von wenigen 10-tel mm, so dass an die Genauigkeit der Herstellung höchste Anforderungen gestellt werden müssen. Es ist deswegen hilfreich, wenn beispielsweise der Maschinentisch, auf dem das Werkstück 1 aufgespannt ist, durch Piezoaktoren in X-und Y-Richtung verfahren wird, da mit diesen Piezoaktoren kleinste Stellbewegungen mit höchster Präzision und Wiederholgenauigkeit ausführbar sind.

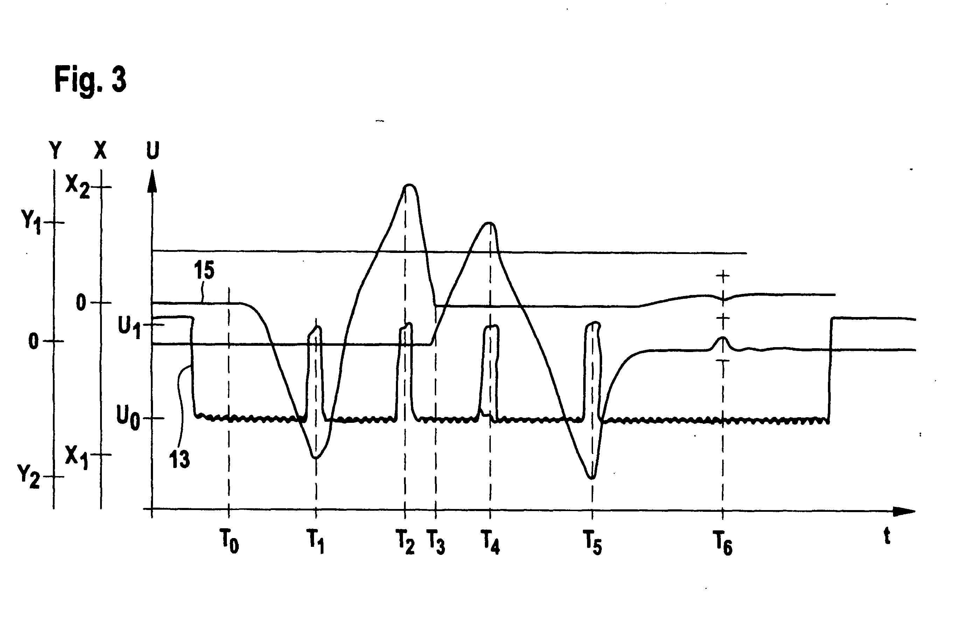

In Figur 3 ist der zeitliche Verlauf der Spannung sowie der Position der Elektrode 9 relativ zum zweiten zylindrischen Abschnitt 5c in Diagrammform dargestellt. Eine erste Linie 13 zeigt den zeitlichen Verlauf der elektrischen Spannung zwischen Elektrode 9 und Werkstück 1. Dabei ist zu beachten, dass der Betrag der Spannung dargestellt ist. Zum Zeitpunkt T₀ hat die Spannung einen Basiswert U₀. Wenn nun in T₁ die Elektrode 9 ausgehend von der Position zum Zeitpunkt T₀ die Position x₁ erreicht hat, dann ändert sich der Betrag der elektrischen Spannung wegen des Kurzschlusses zwischen Elektrode 9 und Werkstück 1 signifikant. Die Spannung erreicht zu diesem Zeitpunkt einen Peak mit dem Betrag U₁. Zum Zeitpunkt T₁ hat die Elektrode die Position [x₁, 0] erreicht.

Die Position der Elektrode 9 in Richtung der X-Achse ist in Figur 3 durch eine zweite Linie 15 dargestellt. Zum Zeitpunkt T₂, wenn nämlich die Elektrode 9 vom linken Rand des zweiten Abschnitts 5c zum rechten Rand des Abschnitts 5c verfahren wurde, hat die Elektrode die Position [x₂, 0] und die Spannung zwischen Werkstück 1 und Elektrode 9 erreicht wieder den Wert U₁, ausgehend von der Ausgangsspannung U₀.

Bis zum Zeitpunkt T₂ bewegt sich die Elektrode 9 auf der Y-Achse.

Nach dem Zeitpunkt T₃ wird die Elektrode wieder auf die X-Achse verfahren und es folgt eine Relativbewegung zwischen Elektrode 9 und Werkstück 5 in Richtung der Y-Achse. Zum Zeitpunkt T₅ erreicht die Spannung wieder den Wert U₁, weil Elektrode 9 und Werkstück 1 einander berühren und sich ein Kurzschluss einstellt. Die Elektrode 9 hat die Position [0, y₁]. Dieser Wert wird abgespeichert und anschließend die Elektrode 9 in Richtung der Y-Achse so weit verfahren, bis sie zum Zeitpunkt T₄ die Position [0, y₂] erreicht hat.

Zum Zeitpunkt T₆ ist die Elektrode 9 im Mittelpunkt des zweiten zylindrischen Abschnitts 5c und des wird die Transformation des Koordinatensystems vorgenommen. Die Verschiebung des Koordinatensystems um die Strecken x₃ und y₃ ist in Figur 3 wegen der Zeichenungenauigkeit nicht ablesbar.

Alternativ kann zum Zeitpunkt T₃ das Werkstück in die Mitte zwischen den Positionen [x₁, 0] und [x₂, 0] mit den Koordinaten [(x₁ + x₂)/2, 0] verfahren werden. Damit ergibt sich die Möglichkeit, die anschließend erfassten Koordinaten in Y-Richtung [ (x₁ + x₂), y₁'] und [ (x₁ + x₂), y₂'] auch zur Messung des Durchmesers der Bohrung (5c) oder für Plausibilitätsprüfungen zu benutzen, wenn der Durchmesser der Elektrode (9) bekannt ist. Dies ist möglich, weil dann der Verfahrweg in Y-Richtung durch den Mittelpunkt der Bohrung geht.

Bei dem anhand der in den Figuren 2 und 3 erläuterten Ausführungsbeispiel verläuft die erste Richtung des erfindungsgemäßen Verfahrens parallel zu der X-Achse der Werkzeugmaschine und die zweite Richtung des erfindungsgemäßen Verfahrens parallel zu der Y-Achse der Werkzeugmaschine. Diese Verfahrensvariante ist steuerungstechnisch besonders einfach realisierbar. Außerdem lässt sich anhand dieser Variante das erfindungsgemäße Verfahren leicht erklären. Es ist jedoch auch möglich, und in manchen Fällen vorteilhaft, wenn die erste Richtung und die zweite Richtung des erfindungsgemäßen Verfahrens nicht parallel zu einer Achse der Werkzeugmaschine verlaufen, da dann die Verfahrwege in der ersten und der zweiten Richtung vergrößert werden können.

Es versteht sich von selbst, dass das erfindungsgemäße Verfahren zum Vermessen der Position einer Bohrung nicht auf Werkstücke, die erodiert werden sollen, beschränkt ist. Es ist vielmehr so, dass prinzipiell das Verfahren immer dann anwendbar ist, wenn das Werkstück elektrisch leitend ist und in der Werkzeugaufnahme der Werkzeugmaschine ein elektrisch leitendes Werkstück oder eine eigens dafür eingespannte elektrisch leitende Elektrode vorgesehen ist. Es versteht sich auch von selbst, dass die Positionierung des Werkzeugs beziehungsweise der Elektrode relativ zum Werkstück nicht nur möglich ist, wenn das Werkstück 1 eine Bohrung 5 aufweist. Es ist auch möglich, beispielsweise die Außenkontur des Werkstücks anzufahren und aus den Koordinaten der Außenkontur einen Referenzpunkt des Werkstücks, der für die nachfolgende Bearbeitung von Bedeutung ist, festzulegen und erforderlichenfalls eine Koordinatentransformation des Koordinatensystems der Werkzeugmaschine in diesen Referenzpunkt vorzunehmen.

## Patentansprüche

1. Verfahren zum Vermessen der Position eines Werkstücks (1) auf einer Werkzeugmaschine, wobei das Werkstück (1) mindestens in zwei Richtungen, insbesondere zwei linear unabhängigen Richtungen (X-Achse, Y-Achse), relativ zu einem Werkzeug (9) der Werkzeugmaschine verfahrbar ist, **gekennzeichnet durch** folgende Verfahrensschritte:
- Verfahren des Werkstücks (1) relativ zu einer Elektrode (9) in einer ersten Richtung (X-Achse) bis Werkstück (1) und eine Elektrode (9) sich berühren und Abspeichern der Position des Werkstücks (x₁),
- Umkehren der Relativbewegung von Werkstück (1) und Elektrode (9), Verfahren des Werkstücks (1) relativ zur Elektrode (9) in der ersten Richtung (X-Achse) bis Werkstück (1) und Elektrode (9) sich berühren und Abspeichern der Position des Werkstücks (x₂),
- Verfahren des Werkstücks (1) relativ zur Elektrode (9) in einer zweiten Richtung (Y-Achse) bis Werkstück (1) und Elektrode (9) sich berühren und Abspeichern der Position des Werkstücks (y₁),
- Umkehren der Relativbewegung von Werkstück (1) und Elektrode (9), Verfahren des Werkstücks (1) relativ zur Elektrode (9) in der zweiten Richtung (Y-Achse) bis Werkstück (1) und Elektrode (9) sich berühren und Abspeichern der Position des Werkstücks (y₂) und
- Berechnen eines Referenzpunktes (x₃, y₃) des Werkstücks (1) relativ zu der Elektrode (9) aus den gespeicherten Werten (x₁, x₂, y₁, y₂), wobei der Kontakt zwischen Werkstück (1) und Elektrode (9) **durch** die Überwachung einer elektrischen Spannung (U) zwischen Werkstück (1) und Elektrode (9) erfolgt.

2. Verfahren nach Anspruch 1, **dadurch gekennzeichnet, dass** die erste Richtung parallel zu einer ersten Bewegungsachse(X-Achse) der Werkzeugmaschine verläuft, und dass die zweite Richtung parallel zu einer zweiten Bewegungsachse(Y-Achse) der Werkzeugmaschine verläuft.

3. Verfahren nach Anspruch 1, **dadurch gekennzeichnet, dass** die erste Richtung durch Superposition einer Bewegung der ersten Bewegungsachse(X-Achse) und der zweiten Bewegungsachse(Y-Achse) der Werkzeugmaschine gebildet wird, und dass die zweite Richtung orthogonal zu der ersten Richtung verläuft.

4. Verfahren nach einem der vorhergehenden Ansprüche, **dadurch gekennzeichnet, dass** die Elektrode (9) auf den berechneten Referenzpunkt (x₃, y₃) positioniert wird, und dass erforderlichenfalls die Rückmeldung "Position der Elektrode (9) eingestellt" an eine Maschinensteuerung übergeben wird.

5. Verfahren nach einem der vorhergehenden Ansprüche, **dadurch gekennzeichnet, dass** eine Transformation des Koordinatensystems (X, Y => X', Y') der Werkzeugmaschine vorgenommen wird, so dass der Referenzpunkt (x₃, y₃) im Ursprung des transformierten Koordinatensystems liegt.

6. Verfahren nach einem der vorhergehenden Ansprüche, **dadurch gekennzeichnet, dass** die Elektrode (9) in einem ersten Schritt in eine Bohrung (5c) des Werkstücks (1) eingefahren wird, in weiteren Schritten die Verfahren nach einem der vorhergehenden Ansprüche durchlaufen werden und anschließend der Mittelpunkt (x₃, y₃) der Bohrung (5c) aus den gespeicherten Werten (x₁, x₂, y₁, y₂) berechnet wird.

7. Verfahren nach einem der vorhergehenden Ansprüche, **dadurch gekennzeichnet, dass** das Werkstück (1) oder die Bohrung (5c) des Werkstücks (1) mit der Elektrode (9) ausgehend von dem berechneten Referenzpunkt oder dem Mittelpunkt (x₃, y₃) der Bohrung (5c) durch Erodieren bearbeitet wird.

8. Verfahren nach Anspruch 6 oder 7, **dadurch gekennzeichnet, dass** die Elektrode (1) zum Mittelpunkt (x₃, y₃) der Bohrung (5c) verfahren wird.

9. Verfahren nach einem der Ansprüche 1 bis 6, **dadurch gekennzeichnet, dass** das Werkstück (1) durch Fräsen, Bohren, Schleifen oder mit einem Laserstrahl bearbeitet wird.

## Claims

1. Method for measuring the position of a workpiece (1) on a machine tool, the workpiece (1) being displaceable at least in two directions, in particular two linearly independent directions (X axis, Y axis), relative to a tool (9) of the machine tool, **characterized by** the following method steps:
- displacing the workpiece (1) relative to an electrode (9) in a first direction (X axis) until workpiece (1) and an electrode (9) touch one another, and storing the position of the workpiece (x₁),
- reversing the relative movement of workpiece (1) and electrode (9), displacing the workpiece (1) relative to the electrode (9) in the first direction (X axis) until workpiece (1) and electrode (9) touch one another, and storing the position of the workpiece (x₂),
- displacing the workpiece (1) relative to the electrode (9) in a second direction (Y axis) until workpiece (1) and electrode (9) touch one another, and storing the position of the workpiece (y₁),
- reversing the relative movement of workpiece (1) and electrode (9), displacing the workpiece (1) relative to the electrode (9) in the second direction (Y axis) until workpiece (1) and electrode (9) touch one another, and storing the position of the workpiece (y₂), and
- calculating a reference point (x₃, y₃) of the workpiece (1) relative to the electrode (9) from the stored values (x₁, x₂, y₁, y₂), the contact between workpiece (1) and electrode (9) being effected by monitoring a voltage (U) between workpiece (1) and electrode (9).

2. Method according to Claim 1, **characterized in that** the first direction runs parallel to a first motion axis (X axis) of the machine tool, and **in that** the second direction runs parallel to a second motion axis (Y axis) of the machine tool.

3. Method according to Claim 1, **characterized in that** the first direction is formed by superposition of a movement of the first motion axis (X axis) and of the second motion axis (Y axis) of the machine tool, and **in that** the second direction runs orthogonally to the first direction.

4. Method according to one of the preceding claims, **characterized in that** the electrode (9) is positioned at the calculated reference point (x₃, y₃), and **in that** if necessary the status signal "position of the electrode (9) set" is transmitted to a machine control.

5. Method according to one of the preceding claims, **characterized in that** a transformation of the coordinate system (X, Y => X', Y') of the machine tool is carried out, so that the reference point (x₃, y₃) lies at the origin of the transformed coordinate system.

6. Method according to one of the preceding claims, **characterized in that** the electrode (9) is moved into position in a bore (5c) of the workpiece (1) in a first step, the procedures according to one of the preceding claims are followed in further steps, and then the centre (x₃, y₃) of the bore (5c) is calculated from the stored values (x₁, x₂, y₁, y₂).

7. Method according to one of the preceding claims, **characterized in that** the workpiece (1) or the bore (5c) of the workpiece (1) is machined by erosion using the electrode (9) starting from the calculated reference point or the centre (x₃, y₃) of the bore (5c).

8. Method according to Claim 6 or 7, **characterized in that** the electrode (1) is displaced to the centre (x₃, y₃) of the bore (5c).

9. Method according to one of Claims 1 to 6, **characterized in that** the workpiece (1) is machined by milling, drilling, grinding or by a laser beam.

## Revendications

1. Procédé de mesure de la position d'une pièce (1) sur une machine-outil, la pièce (1) mobile par rapport à un outil (9) de la machine-outil dans deux directions, notamment deux directions indépendantes sur le plan linéaire (axe X, axe Y),
**caractérisé par**
les étapes suivantes consistant à :
- déplacer la pièce (1) par rapport à une électrode (9) dans une première direction (axe X) jusqu'à ce que la pièce (1) et une électrode (9) entrent en contact et enregistrer la position de la pièce (x₁),
- inverser le mouvement relatif de la pièce (1) et de l'électrode (9), déplacer la pièce (1) par rapport à l'électrode (9) dans la première direction (axe X) jusqu'à ce que la pièce (1) et l'électrode (9) entrent en contact et enregistrer la position de la pièce (x₂),
- déplacer la pièce (1) par rapport à l'électrode (9) dans une deuxième direction (axe Y) jusqu'à ce que la pièce (1) et l'électrode (9) entrent en contact et enregistrer la position de la pièce (y₁),
- inverser le mouvement relatif de la pièce (1) et de l'électrode (9), déplacer la pièce (1) par rapport à l'électrode (9) dans la deuxième direction (axe Y) jusqu'à ce que la pièce (1) et l'électrode (9) entrent en contact et enregistrer la position de la pièce (y₂), et
- calculer un point de référence (x₃, y₃) de la pièce (1) par rapport à l'électrode (9) à partir des valeurs enregistrées (x₁, x₂, y₁, y₂), le contact entre la pièce (1) et l'électrode (9) se produisant en surveillant une tension électrique (U) entre la pièce (1) et l'électrode (9).

2. Procédé selon la revendication 1,
**caractérisé en ce que**
la première direction est parallèle à un premier axe de déplacement (axe X) de la machine-outil, et la deuxième direction est parallèle à un deuxième axe de déplacement (axe Y) de la machine-outil.

3. Procédé selon la revendication 1,
**caractérisé en ce que**
la première direction est formée par la superposition d'un mouvement du premier axe de déplacement (axe X) et du deuxième axe de déplacement (axe Y) de la machine-outil, et la deuxième direction est orthogonale à la première.

4. Procédé selon l'une quelconque des revendications précédentes,
**caractérisé en ce que**
l'électrode (9) est positionnée sur le point de référence calculé (x₃, y₃), et si nécessaire le message « Position de l'électrode (9) réglée » est transmis à une commande machine.

5. Procédé selon l'une quelconque des revendications précédentes,
**caractérisé en ce qu'**
on réalise une transformation du système de coordonnées (X, Y → X', Y') de la machine-outil pour amener le point de référence (x₃, y₃) sur l'origine du système de coordonnées transformé.

6. Procédé selon l'une quelconque des revendications précédentes,
**caractérisé en ce que**
dans une première étape on place l'électrode (9) dans un alésage (5c) de la pièce (1), dans d'autres étapes les procédés ont lieu suivant l'une des revendications précédentes et on calcule finalement le centre (x₃, y₃) de l'alésage (5c) est calculé à partir des valeurs enregistrées (x₁, x₂, y₁, y₂).

7. Procédé selon l'une quelconque des revendications précédentes,
**caractérisé en ce que**
la pièce (1) ou l'alésage (5c) de la pièce (1) est traité par érosion avec l'électrode (9) en partant du point de référence calculé ou du centre (x₃, y₃) de l'alésage (5c).

8. Procédé selon la revendication 6 ou 7,
**caractérisé en ce qu'**
on déplace l'électrode (1) par rapport au centre (x₃, y₃) de l'alésage (5c).

9. Procédé selon l'une quelconque des revendications 1 à 6,
**caractérisé en ce que**
la pièce (1) est traitée par fraisage, alésage, meulage ou avec un rayon laser.
